# EUROPEAN PATENT APPLICATION

(11) **EP 4 290 384 A1**
(43) Date of publication of application: **13.12.2023**
(21) Application number: 23177213.8
(22) Date of filing: 05.06.2023
(51) Int. Cl.: G06F 11/10, G06F 11/20

(54) **STORAGE DEVICE**

(30) Priority: 07.06.2022 KR 20220068788
(71) Applicant: Samsung Electronics Co., Ltd., Suwon-si, Gyeonggi-do 16677 (KR)
(72) Inventor: LEE, Seunghan, Suwon-si 16677 (KR)
(74) Representative: Marks & Clerk LLP

(57) **Abstract**

A storage device (200) includes a memory device (220) including a plurality of first nonvolatile memories (NVM1) and a plurality of second nonvolatile memories (NVM2); and a controller (210) configured to sort pieces of data having different attributes and store the pieces of data that were sorted in different first or second memory arrays of the memory device (220). The controller (210) is configured to store data in the first memory array by a mirroring scheme using the plurality of first nonvolatile memories (NVM1), and configured to store data in the second memory array by a striping scheme using the plurality of second nonvolatile memories (NVM2).

## Description

Example embodiments of the present disclosure relate to a storage device including a nonvolatile memory, and an electronic system including the storage device.

### BACKGROUND

Flash memory devices may be widely used as audio and image data storage media for information devices such as a computer, a smartphone, a PDA, a digital camera, a camcorder, a voice recorder, an MP3 player, and a portable computer (handheld PC). A representative example of a flash memory-based mass storage device may be a solid state drive (SSD).

A storage device may support a multi-stream function of classifying and storing data according to a stream identifier (ID) provided together with a write request from a host.

### SUMMARY

An example embodiment of the present disclosure is to provide a storage device supporting a multi-stream function, in which different I/O performance and data recovery performance may be provided for each data according to a stream ID allocated to the data.

An example embodiment of the present disclosure is to provide an electronic system in which a host may allocate a stream ID to the data depending on data attributes, and the storage device may apply different storing schemes depending on a stream ID allocated to the data, thereby providing different I/O performance and data recovery performance depending on the data attributes.

According to an example embodiment of the present disclosure, a storage device includes a memory device including a plurality of first nonvolatile memories and a plurality of second nonvolatile memories; and a controller configured to sort pieces of data having different attributes received from a host, and store the pieces of data that were sorted in different first or second memory arrays of the memory device, where the controller is configured to store data in the first memory array by a mirroring scheme using the plurality of first nonvolatile memories, and is configured to store data in the second memory array by a striping scheme using the plurality of second nonvolatile memories.

According to an example embodiment of the present disclosure, a storage device includes a memory device including a plurality of nonvolatile memories; and a controller configured to control the memory device, where the controller is configured to group nonvolatile memories having a same bit density among the plurality of nonvolatile memories into respective memory arrays, control the respective memory arrays to store data using different storing schemes, determine a target memory array among the respective memory arrays for storing pieces of data based on stream IDs of the pieces of data received along with a write request from a host, and store the pieces of data in the nonvolatile memories included in the target memory array using one of the different storing schemes applied to the target memory array.

According to an example embodiment of the present disclosure, an electronic system includes a host; and a storage device comprising a first memory array for storing data using a mirroring scheme, and a second memory array for storing data using a striping scheme, where the host is configured to allocate respective stream IDs to pieces of data having different attributes, map the respective stream IDs to a storage scheme comprising one of the mirror scheme or the striping scheme, and provide mapping information between the respective stream IDs and the storage scheme to the storage device, and where the storage device is configured to determine a mapping relationship between the respective stream IDs and the first memory array or the second memory array based on the mapping information, sort the pieces of data received from the host based on the respective stream IDs allocated to the pieces of data, and store the pieces of data that were sorted in the first memory array or the second memory array.

At least some of the above and other features of the invention are set out in the claims.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a diagram illustrating an electronic system including a storage device according to an example embodiment of the present disclosure;
FIG. 2 is a block diagram illustrating a storage device according to an example embodiment of the present disclosure;
FIG. 3 is a block diagram illustrating a nonvolatile memory;
FIG. 4 is a diagram illustrating a 3D V-NAND structure applicable to a storage device according to an example embodiment;
FIG. 5 is is a diagram illustrating distribution of a threshold voltage of memory cells having various bit densities;
FIG. 6 is a block diagram illustrating a storage device according to an example embodiment of the present disclosure;
FIGS. 7 and 8 are diagrams illustrating a mirroring scheme according to an example embodiment of the present disclosure;
FIGS. 9, 10, and 11 are diagrams illustrating a striping scheme according to an example embodiment of the present disclosure;
FIG. 12 is a table indicating a mapping relationship between memory arrays included in a storage device and stream IDs;
FIG. 13 is a table indicating a mapping relationship between data attributes and stream IDs;
FIGS. 14 and 15 are diagrams illustrating an operation of a storage device according to an example embodiment of the present disclosure; and
FIG. 16 is a diagram illustrating a system to which a storage device is applied according to an example embodiment of the present disclosure.

### DETAILED DESCRIPTION

Hereinafter, embodiments of the present disclosure will be described as follows with reference to the accompanying drawings.

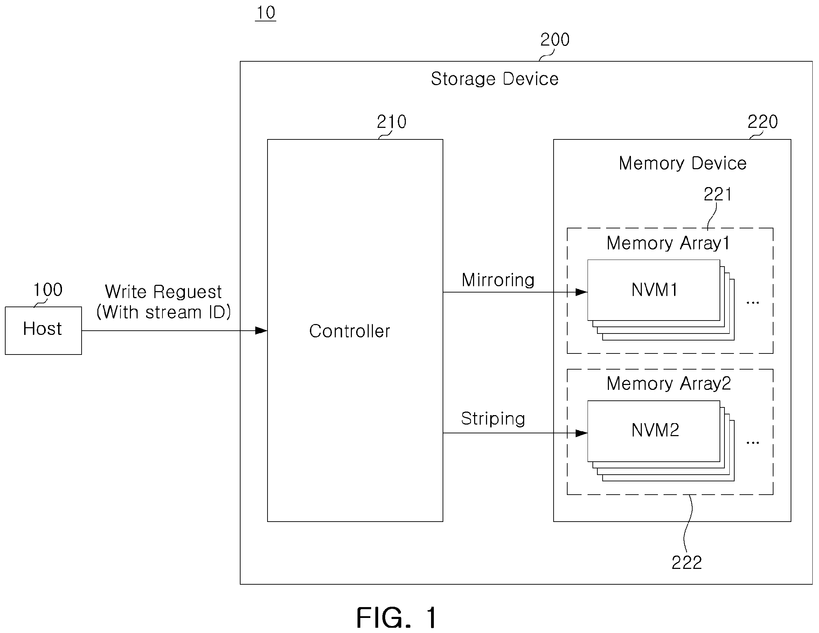

FIG. 1 is a diagram illustrating an electronic system including a storage device according to an example embodiment.

The electronic system 10 may include a host 100 and a storage device 200. Also, the storage device 200 may include a controller 210 and a memory device 220.

The host 100 may include an electronic device, such as, for example, portable electronic devices such as a mobile phone, an MP3 player, or a laptop computer, or electronic devices such as a desktop computer, a game machine, a TV, a projector, and the like. The host 100 may include at least one operating system (OS). The operating system may overall or generally manage and control functions and operations of the host 100.

The storage device 200 may include storage media for storing data in response to a request from the host 100. As an example, the storage device 200 may include a solid state drive (SSD), an embedded memory, and/or a removable external memory. When the storage device 200 is an SSD, the storage device 200 may be a device conforming to a nonvolatile memory express (NVMe) standard. When the storage device 200 is an embedded memory or an external memory, the storage device 200 may be a device conforming to a universal flash storage (UFS) or an embedded multi-media card (eMMC) standard. The host 100 and the storage device 200 may generate a packet according to an adopted standard protocol and may transmit the packet.

The memory device 220 may maintain stored data even when power is not supplied. The memory device 220 may store data provided from the host 100 through a program operation, and may output data stored in the memory device 220 through a read operation. The memory device 220 may include a plurality of nonvolatile memories NVM1, NVM2 (collectively, NVM). The nonvolatile memories NVM may include a plurality of memory blocks. The memory block may include a plurality of pages each including a plurality of memory cells. The memory cells may be programmed or may read in units of pages, and may be erased in units of memory blocks.

When the memory device 220 includes a flash memory, the flash memory may include a 2D NAND memory or a 3D (orvertical) NAND (VNAND) memory. As another example, the storage device 200 may include other various types of nonvolatile memories. For example, the storage device 200 may include a magnetic RAM (MRAM), a spin-transfer torque MRAM (MRAM), a conductive bridging RAM (CBRAM), a ferroelectric RAM (FeRAM), a phase RAM (PRAM), a resistive memory (Resistive RAM) and various other types of memory.

The controller 210 may control the memory device 220 in response to a request from the host 100. For example, the controller 210 may provide data read from the memory device 220 to the host 100, and may store the data provided from the host 100 in the memory device 220. For this operation, the controller 210 may control operations such as a read operation, a program operation, and an erase operation of the memory device 220.

The controller 210 may perform a foreground operation performed in response to a request from the host 100 and also a background operation for managing the memory device 220. For example, the memory device 220 may have attributes in which a unit of a program operation may be different from a unit of an erase operation and overwriting may not be supported. Due to these attributes, when data stored in the memory device 220 is updated, the amount of invalid data stored in the memory device 220 may increase, and valid data may be distributed. The controller 210 may collect valid data distributed in the memory device 220 and may perform a garbage collection operation to secure free space in the memory device 220.

Since the amount of processing resources of the controller 210 is limited, when the garbage collection operation is performed too frequently, an overhead in which data input/output performance of the storage device 200 is deteriorated may occur. When data having similar attributes may be collected and stored in the memory device 220, effective data may be less distributed even when data is updated, and overhead due to garbage collection may be alleviated.

The storage device 200 may support a multi-stream function to alleviate overhead. The multi-stream function may refer to a function in which the storage device 200 may sort pieces of data based on attributes, and store pieces of data having different attributes in different memory regions. For example, the storage device 200 may sort the pieces of data received from the host 100 based on stream IDs (identifiers) allocated thereto, and store pieces of data having different stream IDs in different memory regions. When the host 100 provides a write request for data to the storage device 200 such that the storage device 200 may classify and store pieces of data according to attributes, the host 100 may also provide a stream ID according to attributes of the pieces of data.

Meanwhile, the host 100 may request the storage device 200 to exhibit different input/output performance and data recovery performance according to the attributes of pieces of data. For example, the host 100 may request to swiftly obtain system data such as log data and metadata from the storage device 200 (e.g., comparatively more quickly than user data). Also, when there is an error in the system data stored in the storage device 200, the host 100 may request that the system data be swiftly recovered. The host 100 may request the storage device 200 to provide a high storage capacity for user data. It may be difficult to meet such a request of the host 100 by simply storing the pieces of data in different spaces according to the attributes of the pieces of data.

According to an example embodiment, the storage device 200 may configure the plurality of memory arrays 221 and 222 by grouping the plurality of nonvolatile memories NVM. The storage device 200 may store the pieces of data in the plurality of memory arrays 221 and 222 based on a stream ID allocated to data received from the host 100. The storage device 200 may store the pieces of data in the plurality of memory arrays 221 and 222 using different storing schemes. The terms "first," "second," etc. may be used herein merely to distinguish one element from another.

The storage device 200 mirrors data between the first nonvolatile memories NVM1 included in for example the first memory array 221 and stripes data in the second nonvolatile memories NVM2 included in for example the second memory array 222. The first memory array 221 can input/output data more swiftly than the second memory array 222, and when an error occurs in the data, the first memory array 221 may swiftly restore the data. The second memory array 222 can store a large amount of pieces of data more efficiently than the first memory array 221.

According to an example embodiment, the host 100 may allocate different stream IDs to the pieces of data according to data attributes, and the storage device 200 may store the pieces of data to which different stream IDs are allocated in different schemes. For example, the host 100 may allocate different stream IDs to system data and user data. The storage device 200 may store system data in the first memory array 221 and may store user data in the second memory array 222 based on the stream ID.

System data may be mirrored in each of the first nonvolatile memories NVM1, and user data may be striped in the second nonvolatile memories NVM2. The storage device 200 may improve input/output performance and data recovery performance of system data, and may efficiently use a storage space of user data. In other words, the storage device may provide differentiated I/O performance and data recovery performance depending on data attributes.

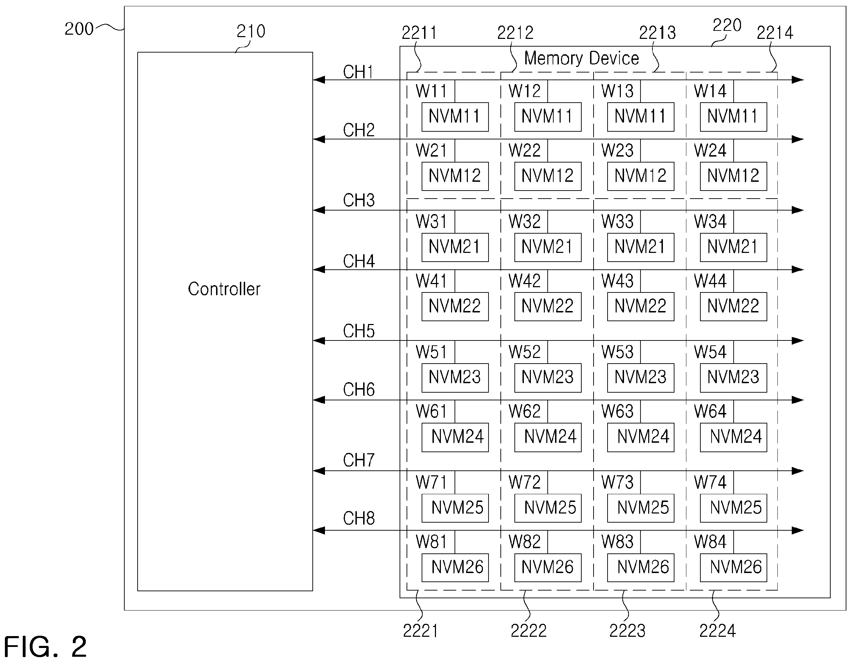

Hereinafter, an example in which the storage device 200 may configure the plurality of memory arrays 221 and 222 will be described in greater detail with reference to FIG. 2.

FIG. 2 is a block diagram illustrating a storage device according to an example embodiment.

Referring to FIG. 2, the storage device 200 may include a controller 210 and a memory device 220. The controller 210 and the memory device 220 in FIG. 2 may correspond to the examples described with reference to FIG. 1.

The memory device 220 has a plurality of nonvolatile memories. As described with reference to FIG. 1, the plurality of nonvolatile memories are grouped into a plurality of first nonvolatile memories NVM1 and a plurality of second nonvolatile memories NVM2 and may form a first memory array 221 and a second memory array 221.

Referring to FIG. 2, first nonvolatile memories NVM11 and NVM12 may be included in first memory arrays 2211-2214, and the second nonvolatile memories NVM21-NVM26 may be included in second memory arrays 2221-2224. Each of the first nonvolatile memories NVM11 and NVM12 in FIG. 2 may correspond to the first nonvolatile memory NVM1 in FIG. 1, and each of the second nonvolatile memories NVM21-NVM26 in FIG. 2 may correspond to the second nonvolatile memory NVM2 in FIG. 1. Each of the first memory arrays 2211-2214 in FIG. 2 may correspond to the first memory array 221 in FIG. 1, and each of the second memory arrays 2221-2224 in FIG. 2 may correspond to the second memory array 222 in FIG. 1.

Each of the nonvolatile memories NVM11-NVM26 may be connected to a channel through a respective connection or way. For example, the first nonvolatile memories NVM11 and NVM12 may be connected to the first and second channels CH1 and CH2 through the ways W11-W24, and the second nonvolatile memories NVM21-The NVM26 may be connected to the third to eighth channels CH3-CH8 through the ways W31-W84.

In an example embodiment, each of the nonvolatile memories NVM11-NVM26 may be implemented as an arbitrary memory unit which may operate in response to an individual command from the controller 210. For example, each of the nonvolatile memories NVM11 to NVM26 may be implemented as a chip or a die, but an example embodiment thereof is not limited thereto. Also, the number of channels included in the storage device 200 and the number of nonvolatile memories connected to each channel are not limited to any particular example.

The controller 210 may transmit signals to and receive signals from the memory device 220 through a plurality of channels CH1-CH8. For example, the controller 210 may transmit commands, addresses, and data to the memory device 220 or may receive data from the memory device 220 through the channels CH1-CH8.

The controller 210 may select one of the nonvolatile memories connected to the corresponding channel through each channel, and transmit signals to and receive signals from the selected nonvolatile memory. The controller 210 may transmit a command, an address, and data to the selected nonvolatile memory or may receive data from the selected nonvolatile memory through a channel.

The controller 210 may transmit signals to and receive signals from the memory device 120 in parallel through different channels. For example, the controller 210 may, while transmitting a command to the memory device 220 through the first channel CH1, transmit another command to the memory device 220 through the second channel CH2. Also, the controller 210 may, while receiving data from the memory device 220 through the first channel CH1, receive other data from the memory device 220 through the second channel CH2.

Each of the nonvolatile memories connected to the controller 210 through the same channel may perform an internal operation in parallel. For example, the controller 210 may transmit a command and an address to the nonvolatile memories NVM1 through the first channel CH1 in sequence. When a command and an address are transmitted to the nonvolatile memories NVM11, each of the nonvolatile memories NVM1 may perform an operation according to the command in parallel.

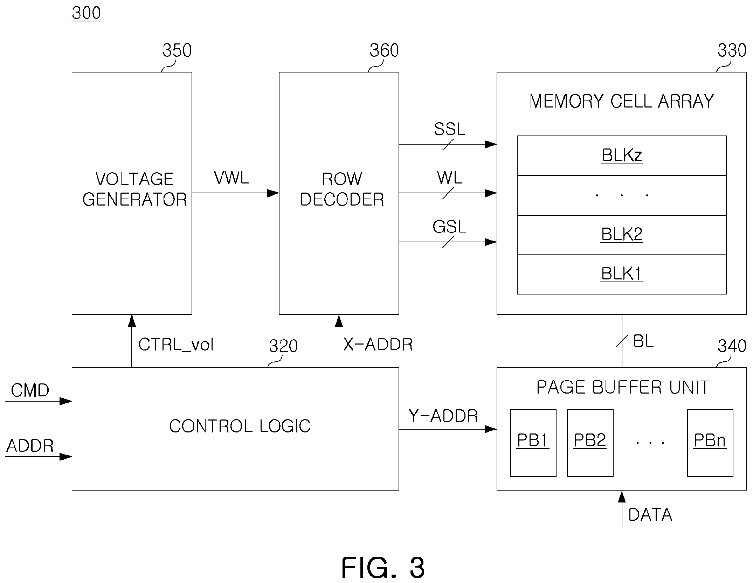

Hereinafter, nonvolatile memories will be described in more detail with reference to FIGS. 3 to 5.

FIG. 3 is a block diagram illustrating a nonvolatile memory. Referring to FIG. 3, the nonvolatile memory 300 may include a control logic circuit 320, a memory cell array 330, a page buffer 340, a voltage generator 350, and a row decoder 360. Although not illustrated in FIG. 3, the nonvolatile memory 300 may further include a memory interface circuit for receiving a command CMD and an address ADDR from an external entity and exchanging data DATA with an external entity, and may further include a column logic, a pre-decoder, a temperature sensor, a command decoder, an address decoder, and the like.

The control logic circuit 320 may control overall various operations in the nonvolatile memory 300. The control logic circuit 320 may output various control signals in response to a command CMD and/or an address ADDR from the memory interface circuit. For example, the control logic circuit 320 may output a voltage control signal CTRL_vol, a row address X-ADDR, and a column address Y-ADDR.

The memory cell array 330 may include a plurality of memory blocks BLK1-BLKz (z is a positive integer), and each of the plurality of memory blocks BLK1-BLKz may include a plurality of memory cells. The memory cell array 330 may be connected to the page buffer unit 340 through the bit lines BL, and may be connected to the row decoder 360 through the word lines WL, the string select lines SSL, and the ground select lines GSL.

In an example embodiment, the memory cell array 330 may include a 3D memory cell array, and the 3D memory cell array may include a plurality of NAND strings. Each NAND string may include memory cells connected to word lines stacked vertically on the substrate, respectively. Relevant examples may be disclosed in U.S. Patent Application Publication No. 7,679,133, U.S. Patent Publication No. 8,553,466, U.S. Patent Publication No. 8,654,587, U.S. Patent Publication No. 8,559,235, and U.S. Patent Application Publication No. 2011/0233648. In an example embodiment, the memory cell array 330 may include a 2D memory cell array, and the 2D memory cell array may include a plurality of NAND strings disposed in row and column directions.

The page buffer 340 may include a plurality of page buffers PB1 to PBn (where n is an integer equal to or greater than 3), and the plurality of page buffers PB1 to PBn may be connected to the memory cells, respectively, through a plurality of bit lines BL. The page buffer 340 may select at least one bit line among the bit lines BL in response to the column address Y-ADDR. The page buffer 340 may operate as a write driver or a sense amplifier depending on an operation mode. For example, during a program operation, the page buffer 340 may apply a bit line voltage corresponding to data to be programmed to a selected bit line. During a read operation, the page buffer 340 may sense data stored in the memory cell by sensing a current or voltage of the selected bit line.

The voltage generator 350 may generate various types of voltages for performing program, read, and erase operations based on the voltage control signal CTRL_vol. For example, the voltage generator 350 may generate a program voltage, a read voltage, a program verify voltage, an erase voltage, or the like, as the word line voltage VWL.

The row decoder 360 may, in response to the row address X-ADDR, select one of the plurality of word lines WL and may select one of the plurality of string selection lines SSL. For example, during a program operation, the row decoder 360 may apply a program voltage and a program verify voltage to a selected word line, and during a read operation, the row decoder 360 may apply a read voltage to the selected word line.

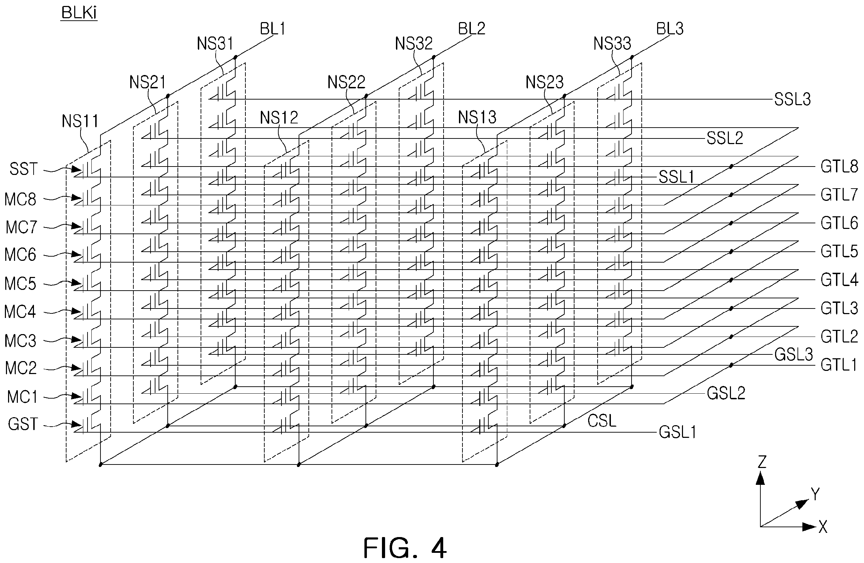

FIG. 4 is a diagram illustrating a 3D V-NAND structure applicable to a storage device according to an example embodiment. When the nonvolatile memory of the storage device is implemented as a 3D V-NAND type flash memory, each of a plurality of memory blocks included in the nonvolatile memory may be represented as an equivalent circuit as illustrated in FIG. 4.

The memory block BLKi illustrated in FIG. 4 may represent a three-dimensional memory block formed on a substrate in a three-dimensional structure. For example, a plurality of memory NAND strings included in the memory block BLKi may be formed in a direction perpendicular to the substrate.

Referring to FIG. 4, the memory block BLKi may include a plurality of memory NAND strings NS11 to NS33 connected between the bit lines BL1, BL2, and BL3 and the common source line CSL. Each of the plurality of memory NAND strings NS11 to NS33 may include a string select transistor SST, a plurality of memory cells MC1, MC2, ..., MC8, and a ground select transistor GST. FIG. 4 illustrates the example in which each of the plurality of memory NAND strings NS11 to NS33 may include eight memory cells MC1, MC2, ..., MC8, but an example embodiment thereof is not limited thereto.

The string select transistor SST may be connected to the corresponding string select lines SSL1, SSL2, and SSL3. The plurality of memory cells MC1, MC2, ..., MC8 may be connected to corresponding gate lines GTL1, GTL2, ..., GTL8, respectively. The gate lines GTL1, GTL2, ..., GTL8 may be word lines, and a portion or subset of the gate lines GTL1, GTL2, ..., GTL8 may be dummy word lines. The ground select transistor GST may be connected to the corresponding ground select lines GSL1, GSL2, or GSL3. The string select transistor SST may be connected to the corresponding bit lines BL1, BL2, or BL3, and the ground select transistor GST may be connected to the common source line CSL.

The word lines (e.g., WL1) on the same level may be connected in common, and the ground selection lines GSL1, GSL2, and GSL3 and the string selection lines SSL1, SSL2, and SSL3 may be isolated from each other. FIG. 4 illustrates the example in which the memory block BLKi is connected to eight gate lines GTL1, GTL2, ..., GTL8 and three bit lines BL1, BL2, AND BL3, but an example embodiment thereof is not limited thereto.

In example embodiments, the nonvolatile memories NVM1 and NVM2 may have various bit densities. A bit density of the nonvolatile memory may refer to the number of pieces of data bits which each of the memory cells included in the nonvolatile memory may store.

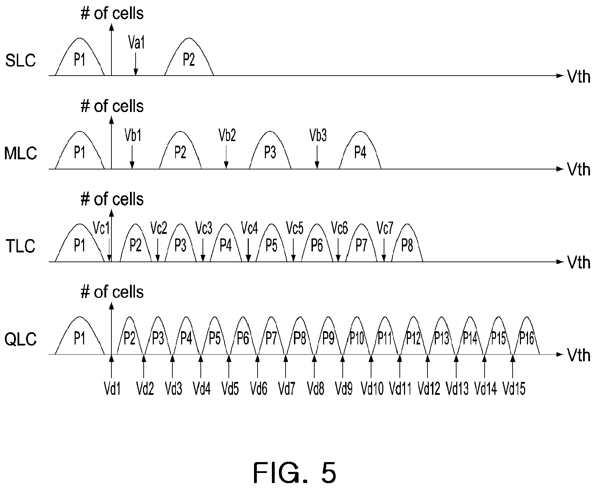

FIG. 5 is a diagram illustrating distribution of a threshold voltage of memory cells having various bit densities.

Referring to FIG. 5, the horizontal axis of each graph indicates the magnitude of the threshold voltage, and the vertical axis indicates the number of memory cells.

When the memory cell is a single level cell (SLC) storing 1-bit data, the memory cell may have a threshold voltage corresponding to one of the first program state P1 and the second program state P2. The read voltage Va1 may be a voltage for distinguishing the first program state P1 from the second program state P2. Since the memory cell having the first program state P1 has a threshold voltage lower than the read voltage Va1, the memory cell may be read as an on-cell. Since the memory cell having the second program state P2 has a threshold voltage higher than the read voltage Va1, the memory cell may be read as an off-cell.

When the memory cell is a multiple level cell (MLC) storing 2-bit data, the memory cell may be a threshold voltage corresponding to one of the first to fourth program states P1 to P4. The first to third read voltages Vb1 to Vb3 may be read voltages for distinguishing the first to fourth program states P1 to P4 from each other.

When the memory cell is a triple level cell (TLC) storing 3-bit data, the memory cell may have a threshold voltage corresponding to one of the first to eighth program states P1 to P8. The first to seventh read voltages Vc1 to Vc7 may be read voltages for distinguishing the first to eighth program states P1 to P8 from each other.

When the memory cell is a quadruple level cell (QLC) storing 4-bit data, the memory cell may have one of first to sixteenth program states P1 to P16. The first to fifteenth read voltages Vd1 to Vd15 may be read voltages for distinguishing the first to sixteenth program states P1 to P16 from each other.

Among SLC, MLC, TLC, and QLC, SLC may have the lowest bit density and QLC may have the highest bit density. A memory cell having a higher bit density may store a large amount of pieces of data, but the number of program states which may be formed in the corresponding memory cell and the number of read voltages for distinguishing the program states may increase. Accordingly, each program state may need to be precisely programmed in a memory cell having a high bit density, and when the threshold voltage distribution is deteriorated, it may be highly likely that data may be read erroneously. That is, the higher the bit density of the memory cell, the lower the reliability of pieces of data stored in the memory cell may be.

According to an example embodiment, the first nonvolatile memories NVM1 may have a bit density relatively lower than that of the second nonvolatile memories NVM2. The storage device 200 may increase data stability by mirroring data to the first nonvolatile memories NVM1 including memory cells having relatively high reliability. Also, the storage device 200 may more efficiently use the storage space by striping the data to the second nonvolatile memories NVM2 including memory cells for storing data having a relatively high density.

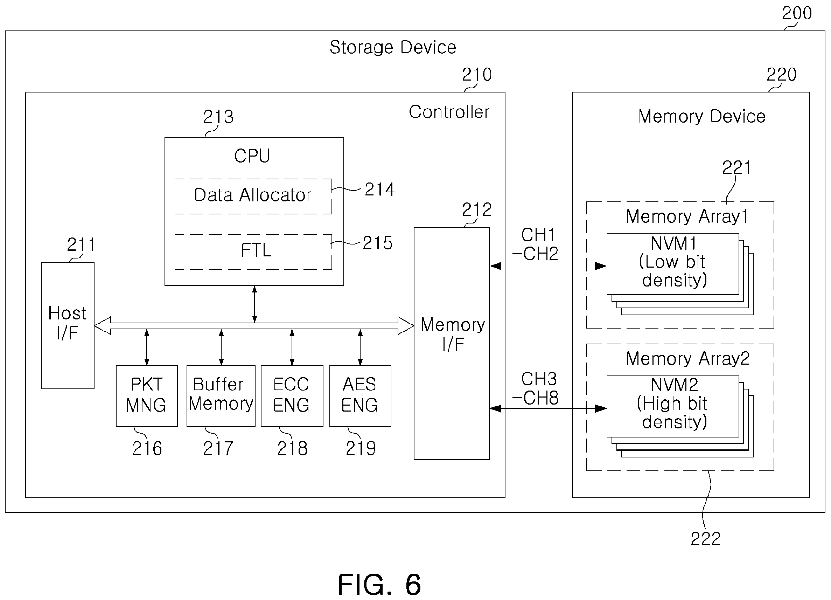

FIG. 6 is a block diagram illustrating a storage device 200 according to an example embodiment.

Referring to FIG. 6, the storage device 200 includes a controller 210 and a memory device 220. The controller 210 and the memory device 220 in FIG. 6 may correspond to the examples described with reference to FIGS. 1 and 2.

As described with reference to FIGS. 1 and 2, the memory device 220 includes a plurality of nonvolatile memories NVM1 and NVM2. The first nonvolatile memories NVM1 connected to the first and second channels CH1 and CH2 may be included in the first memory array 221, and the second nonvolatile memories NVM2 connected to the third to eighth channels may be included in the second memory array 222.

According to an example embodiment, the first nonvolatile memories NVM1 may include memory cells having a relatively low bit density, and the second nonvolatile memories NVM2 may include memory cells having a relatively high bit density. For example, the first nonvolatile memories NVM1 may be implemented as SLCs, and the second nonvolatile memories NVM2 may be implemented as MLCs, TLCs, or QLCs.

The controller 210 may include a host interface 211, a memory interface 212, and a central processing unit (CPU) 213. Also, the controller 210 may further include a packet manager 216, a buffer memory 217, an error correction code (ECC) engine 218, and an advanced encryption standard (AES) engine 219. The CPU 213 may drive the data allocator 214 and a flash translation layer (FTL) 215, and the controller 210 may further include a working memory (not illustrated) into which the data allocator 214 and the FTL 215 are loaded.

The host interface 211 may transmit and receive packets to and from the host 100. A packet transmitted from the host 100 to the host interface 211 may include a command or data to be written to the memory device 220, and a packet transmitted from the host interface 211 to the host 100 may include a response to a command or data read from the memory device 220.

The memory interface 212 may transmit data to be written to the memory device 220 to the memory device 220 or may receive data read from the memory device 220. The memory interface 212 may be implemented to comply with a standard protocol such as a toggle or an open NAND flash interface (ONFI).

The data allocator 214 may divide or sort pieces of data allocated to different stream IDs based on the stream ID allocated to the pieces of data received from the host 100 and store the divided or sorted pieces of data to the first memory array 221 or the second memory array 222.

The data allocator 214 may control the first nonvolatile memories NVM1 included in the first memory array 221 to mirror data. For example, data stored in the first memory array 221 may be copied to the first nonvolatile memories NVM1 included in the first memory array 221. Since the bit density of memory cells of the first nonvolatile memories NVM1 is relatively low, an error may infrequently occur in the data copy of the first nonvolatile memories NVM1. Also, even when an error occurs in one of the two or more data copies stored in the first memory array 221, data may be recovered using the other copy.

Also, the data allocator 214 may control the second nonvolatile memories NVM2 included in the second memory array 222 to stripe data. For example, data allocated to the second memory array 222 may be striped through two or more of the second nonvolatile memories NVM2. The striping of data may indicate that logically contiguous data chunks may be stored across a plurality of nonvolatile memories by a round-robin method, for example, with each chunk in a respective nonvolatile memory.

Meanwhile, the data allocator 214 may generate a parity chunk by performing a parity operation on a predetermined number of data chunks, and the parity chunk may also be striped together with the data chunks. When there is an error in one of the data chunk, the storage device 200 may restore the data chunk using the other data chunks and parity chunks striped together with the data chunk. The storage device 200 may efficiently store a large amount of pieces of data in the storage space of the second nonvolatile memories NVM2 and may enable data recovery.

The FTL 215 may perform various functions such as address mapping, wear-leveling, and garbage collection. The address mapping operation may be an operation of changing a logical address received from the host 100 into a physical address used to actually store data in the memory device 220. The wear-leveling may be a technique for preventing excessive degradation of a specific block by ensuring that blocks in the memory device 220 are used uniformly, and may be implemented through a firmware technique for balancing erase counts of physical blocks, for example. The garbage collection may be a technique for securing usable capacity in the memory device 220 by copying valid data of a block to a new block and erasing an existing block.

The packet manager 216 may generate a packet according to the protocol of the interface negotiated with the host 100 or may parse various information from the packet received from the host 100.

The buffer memory 217 may temporarily store data to be written to the memory device 220 or data to be read from the memory device 220. The buffer memory 217 may have an element provided in the controller 210, or may be disposed externally of the controller 210.

The ECC engine 218 may perform an error detection and correction function for data read from the memory device 220 (also referred to as read data). More specifically, the ECC engine 218 may generate parity bits for write data to be written to the memory device 220, and the generated parity bits may be stored in the memory device 220 together with the write data. When reading data from the memory device 220, the ECC engine 218 may correct an error in the read data using parity bits read from the memory device 220 together with the read data, and may output the error-corrected read data.

The AES engine 219 may perform at least one of an encryption operation and a decryption operation for data input to the controller 210 using a symmetric-key algorithm.

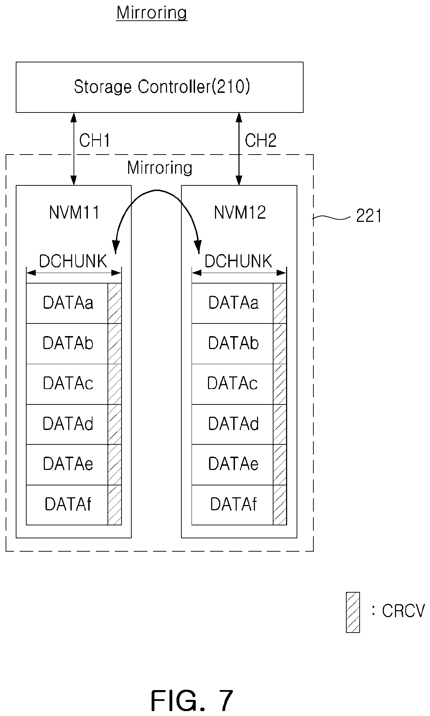

Hereinafter, techniques for the storage device 200 to store data in a memory array will be described in greater detail with reference to FIGS. 7 to 11.

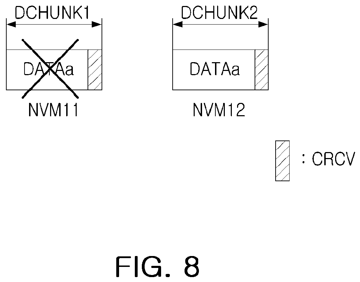

FIGS. 7 and 8 are diagrams illustrating a mirroring scheme according to an example embodiment.

Referring to FIG. 7, the controller 210 may be connected to a nonvolatile memory NVM11 through a first channel CH1 and may be connected to a nonvolatile memory NVM12 through a second channel CH2. The nonvolatile memories NVM11 and NVM12 may refer to memories included in the first memory array 221 described with reference to FIGS. 1, 2, and 6.

The controller 210 may control data to be mirrored between the nonvolatile memories NVM11 and NVM12 included in the first memory array 221. For example, when the controller 210 receives pieces of data from the host 100, the controller 210 may store the pieces of data in the nonvolatile memories NVM11 and NVM12, respectively.

For example, the controller 210 may divide the pieces of data received from the host 100 into data units DATAa-DATAf of a predetermined size, and may add a cyclic redundancy check (CRC) value CRCV to each data unit, thereby generating data chunks DCHUNK. The CRC value CRCV may be generated by the ECC engine 218 of the controller 210 described with reference to FIG. 6. The controller 210 may store the data chunks DCHUNK in the nonvolatile memories NVM11 and NVM12, respectively. FIG. 7 illustrates the example in which the data chunks DCHUNK including the same data units DATAa-DATAf are mirrored in the nonvolatile memories NVM11 and NVM12.

Referring to FIG. 8, even when an error occurs in one of the data chunks stored in the nonvolatile memories NVM11 and NVM12, data may be recovered using the other data chunks. For example, when a read request for the data unit DATAa is received from the host 100, the controller 210 may obtain the data chunks DCHUNK1 and DCHUNK2 including the data unit DATAa from the nonvolatile memories NVM11 and NVM12.

The controller 210 may check whether there is an error in the data chunk by performing a CRC operation on one of the data chunks. In the example in FIG. 8, it may be determined that there may be an error in the first data chunk DCHUNK1 as a result of performing a CRC operation on the first data chunk DCHUNK1 obtained from the nonvolatile memory NVM11 by the controller 210. The controller 210 may provide the data to the host 100 using the second data chunk DCHUNK2 mirrored in the nonvolatile memory NVM12. Also, the first memory array 221 storing the data chunk including an error may be recovered by copying the second data chunk DCHUNK2 back to the nonvolatile memories NVM11 and NVM12.

In example embodiments, the nonvolatile memories NVM11 and NVM12 may include SLCs. Accordingly, an error may infrequently occur in data chunks stored in the nonvolatile memories NVM11 and NVM12.

The nonvolatile memories NVM11 and NVM12 may perform a read operation independently of each other, may be connected to different channels CH1 and CH2 and may communicate with the controller 210 in parallel. The controller 210 may obtain the first data chunk DCHUNK1 from the nonvolatile memory NVM11 and may simultaneously obtain the second data chunk DCHUNK2 from the nonvolatile memory NVM12. Accordingly, when there is an error in the first data chunk DCHUNK1, the controller 210 may provide and restore data using the previously obtained second data chunk DCHUNK2.

That is, an error may rarely occur in the data chunks stored in the first memory array 221, and even when an error occurs in some data chunks, the storage device 200 may swiftly perform data recovery.

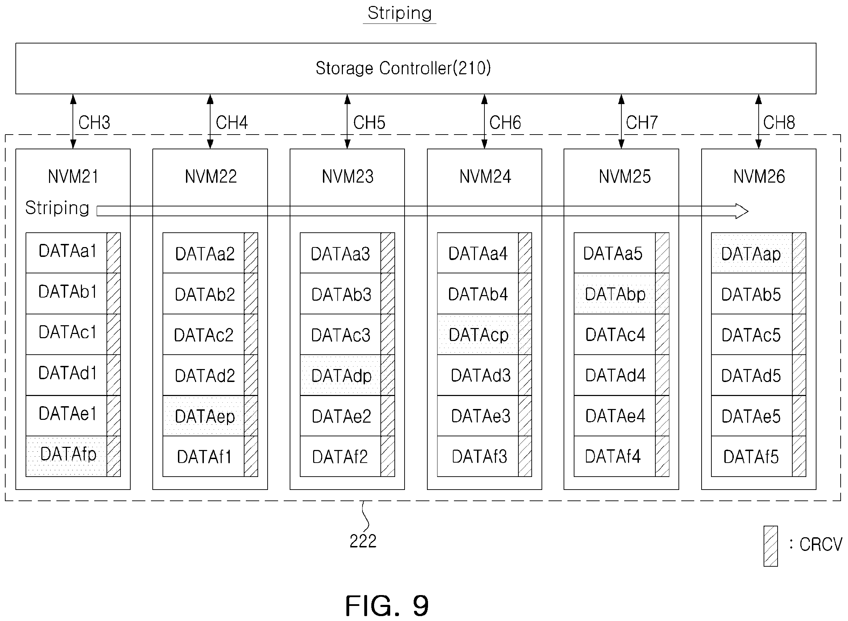

FIGS. 9 to 11 are diagrams illustrating a striping scheme according to an example embodiment.

Referring to FIG. 9, the controller 210 may be connected to the nonvolatile memories NVM21-NVM26 through third to eighth channels CH3-CH8. The nonvolatile memories NVM21-NVM26 may refer to memories included in the second memory array 222 described with reference to FIGS. 1, 2, and 6.

The controller 210 may control data to be striped between the nonvolatile memories NVM21-NVM26 included in the second memory array 222.

For example, the controller 210 may generate a parity chunk using a predetermined number of data chunks, and may store the data chunks and the parity chunk across the nonvolatile memories NVM21-NVM26, for example, with each data chunk DCHUNK or parity chunk PCHUNK stored in a respective one of the nonvolatile memories NVM21-NVM26. A unit of pieces of data which may be stored across the nonvolatile memories NVM21 to NVM26 be referred to as a stripe.

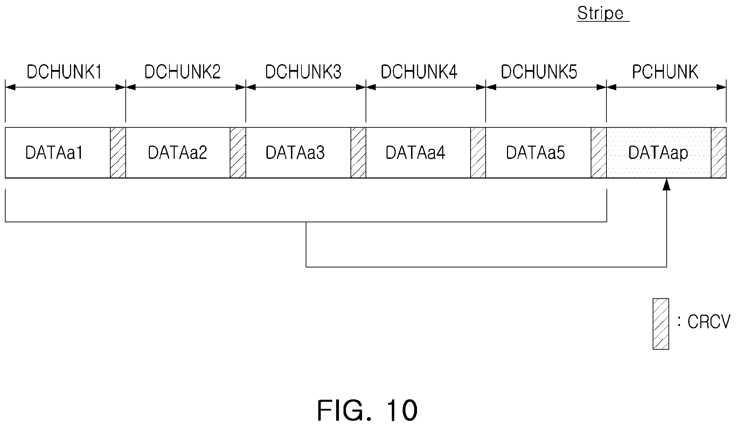

FIG. 10 illustrates a single stripe. The stripe may include a predetermined number of data chunks DCHUNK1-DCHUNK5 and a parity chunk PCHUNK. Data chunks DCHUNK1-DCHUNK5 included in a single stripe may include logically continuous data. For example, the controller 210 may divide pieces of continuous data received from the host 100 into data units DATAa1-DATAa5 having a predetermined size. Also, the controller 210 may generate the data chunks DCHUNK1-DCHUNK5 by adding the CRC value CRCV to each of the data units DATAa1-DATAa5.

The parity chunk PCHUNK may be generated based on a parity operation using a predetermined number of data chunks DCHUNK1-DCHUNK5. For example, the ECC engine 218 described with reference to FIG. 6 may generate a plurality of parity bits by performing an XOR operation between the bits having the same order with respect to a plurality of bits sequentially arranged in each of the data chunks DCHUNK1-DCHUNK5, and the generated parity bits may form a parity chunks PCHUNK. However, the method of calculating parity applicable to an example embodiment thereof is not limited thereto.

Meanwhile, when the controller 210 stores data using the striping scheme, a parity operation may be required, and accordingly, data input/output performance may be slightly lower than that of storing data using the mirroring scheme. However, when the controller 210 stores data using the striping scheme, a larger amount of data chunks may be stored in a storage space having the same capacity as compared to when the data is stored using the mirroring scheme.

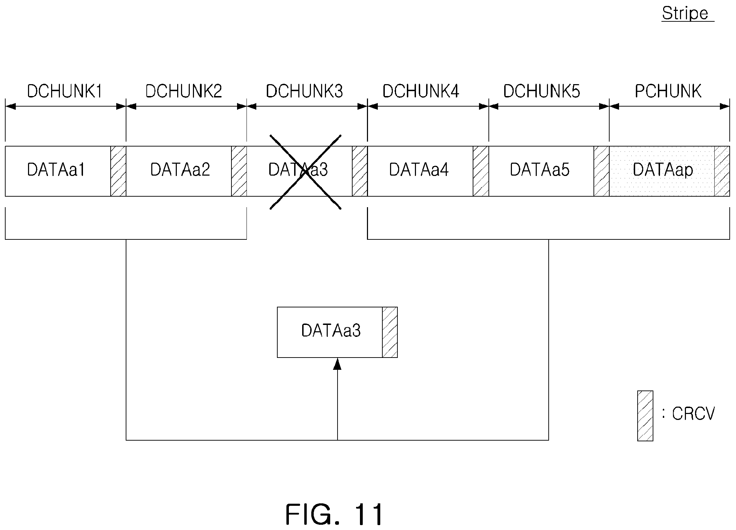

Referring to FIG. 11, even when an error occurs in a data chunk included in a stripe, the controller 210 may maintain and restore the data using the other data chunks and the other parity chunk included in the stripe. For example, when a request for data DATAa3 is received from the host 100, the controller 210 may obtain a stripe including the data DATAa3 from the nonvolatile memories NVM21-NVM26 included in the second memory array 222.

The controller 210 may check whether there is an error in the third data chunk DCHUNK3 by performing a CRC operation on the third data chunk DCHUNK3 including the data DATAa3. When there is an error in the third data chunk DCHUNK3, the controller 210 may recover the third data chunk DCHUNK3 by performing a parity operation using the other data chunks and the other parity chunk PCHUNK in the loaded stripe. For example, when a parity chunk PCHUNK is generated by performing an XOR operation on the data chunks DCHUNK1-DCHUNK5, the data chunk may be recovered by performing an XOR operation on the other data chunks and the other parity chunk PCHUNK.

The controller 210 may provide data to the host 100 using the recovered third data chunk DCHUNK3, and may restore the second memory array 222 storing the data including an error by storing the stripe including the recovered third data chunk DCHUNK3 across the nonvolatile memories NVM21-NVM26.

The nonvolatile memories NVM21-NVM26 may perform a read operation independently of each other, may be connected to different channels CH3-CH8 and may communicate with the controller 210 in parallel. The controller 210 may obtain the entire stripe in parallel from the nonvolatile memories NVM21 to NVM26 even when the data read requested from the host 100 is included in a portion of data chunks among the data chunks included in the stripe. When there is an error in some data chunks, the controller 210 may swiftly respond to the read request of the host 100 by recovering data using the other data chunks and parity chunks obtained in advance.

In example embodiments, the nonvolatile memories NVM21-NVM26 may include memory cells such as MLC, TLC, and QLC. Accordingly, when an error occurs in a portion of data chunks stored in the second memory array 222, the storage device 200 may recover the data chunks using the parity chunks, and may efficiently use the storage space of the second memory array 222.

Meanwhile, an example embodiment in which five data chunks and one parity chunk are striped in six nonvolatile memories has been described with reference to FIGS. 9 to 11. However, an example embodiment thereof is not limited to the example in which an N-1 (where N is a natural number) number of data chunks and one parity chunk are striped in an N number of nonvolatile memories. For example, an N-2 number of data chunks and two parity chunks generated using the number of N-2 data chunks may be included in a single stripe.

As described with reference to FIGS. 7 to 11, the storage device 200 may include a first memory array 221 for storing data using a mirroring scheme and a second memory array 222 for storing data using a striping scheme. The first memory array 221 may have an advantage in that the first memory array 221 may recover data more swiftly than the second memory array 222, and the second memory array 222 may have an advantage in that the second memory array 222 may store a larger amount of pieces of data in the storage space having the same capacity.

According to an example embodiment, the storage device 200 may store system data in the first memory array 221 such that high stability and high input/output performance of the system data may be ensured, and when an error occurs in the system data, the system data may be swiftly recovered. Also, the storage device 200 may efficiently store a large amount of user data in the second memory array 222.

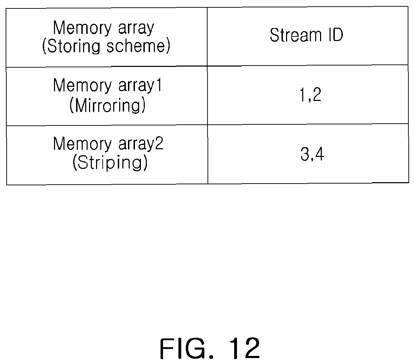

Hereinafter, a method of providing differentiated performance depending on data attributes by dividing or sorting pieces of data according to the stream IDs allocated to the pieces of data and storing the divided or sorted data in a plurality of memory arrays will be described in greater detail with reference to FIGS. 12 to 15.

FIG. 12 is a table indicating a mapping relationship between memory arrays included in a storage device and stream IDs.

Referring to FIG. 12, the pieces of data allocated to stream IDs "1" and "2" may be stored in a first memory array, and the pieces of data allocated to stream IDs "3" and "4" may be stored in a second memory. According to the above-described example embodiment, the storage device 200 may store data in the first memory array using a mirroring scheme and may store data in the second memory array using a striping scheme.

The controller 210 may store a mapping table indicating a mapping relationship between memory arrays and stream IDs. When receiving the stream ID allocated to the data along with a write request for data from the host 100, the controller 210 may determine a target memory array for storing the data by referring to the mapping table. The controller 210 may store the data using a storing scheme applied to the target memory array. For example, the controller 210 may store data to be stored in the first memory array 221 using a mirroring scheme, and may store data to be stored in the second memory array 222 using a striping scheme.

According to an example embodiment, a relationship between a stream ID and a storing scheme may be shared between the host 100 and the storage device 200. The host 100 may allocate a stream ID to the pieces of data depending on the data attribute, and may provide the stream ID together with a write request for the pieces of data to the storage device 200, such that the host 100 may request the storage device 200 to apply different storing schemes to the pieces of data depending on the data attributes.

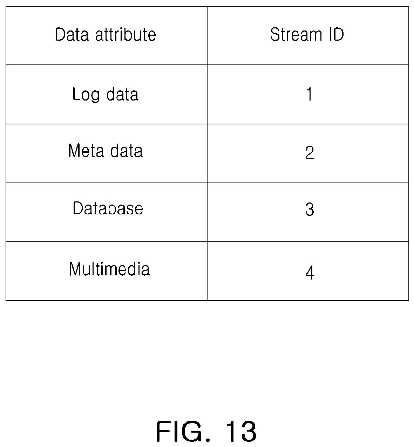

FIG. 13 is a table indicating a mapping relationship between data attributes and stream IDs.

The host 100 may allocate different stream IDs to pieces of data having different attributes. In the example in FIG. 13, stream IDs "1," "2," "3," and "4" may be allocated to log data, metadata, database, and multimedia, respectively.

Referring to FIGS. 12 and 13 together, the storage device 200 may store system data such as log data and metadata in the first memory array in response to a write request from the host 100 by a mirroring scheme, and may store user data such as a database and multimedia in the second memory array using a striping scheme.

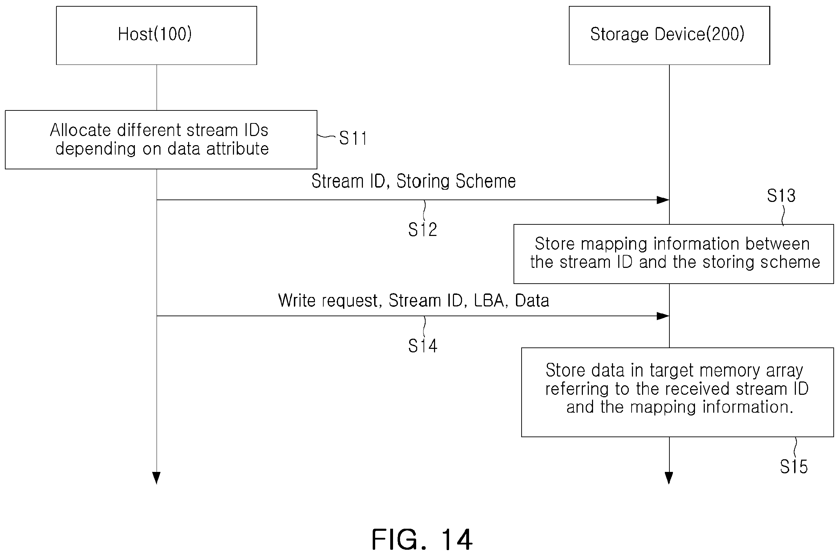

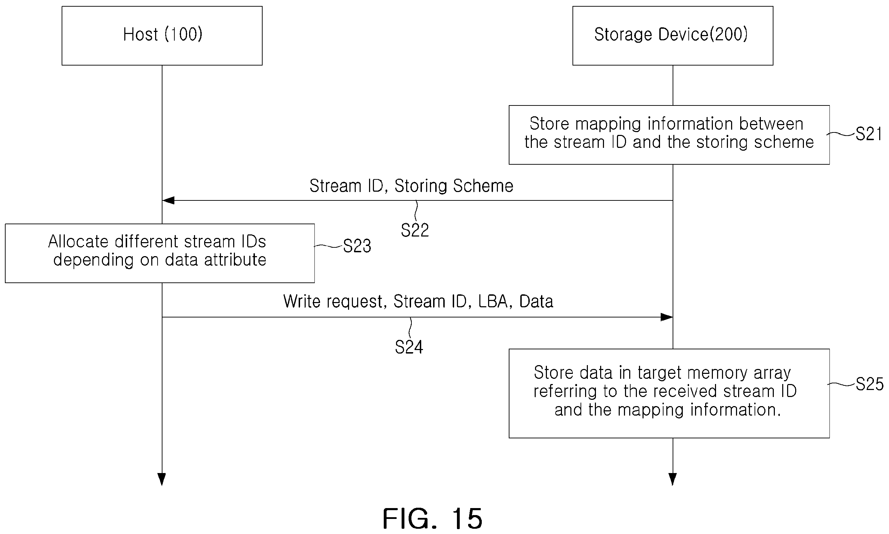

Hereinafter, operations of the host 100 and the storage device 200 which may allow the storage device 200 to apply different storing schemes depending on data attributes will be described with reference to FIGS. 14 and 15.

FIG. 14 is a diagram illustrating operations of the host 100 and the storage device 200 according to the first example embodiment.

Referring to FIG. 14, in operation S11, the host 100 may allocate different stream IDs depending on data attributes. The host 100 may determine which storing scheme should be applied to which stream ID depending on the data attribute information allocated to the stream ID. Also, the host 100 may provide a request indicating a storing scheme according to the stream ID to the storage device in operation S12. In operation S13, the storage device 200 may receive the request from the host 100 and may store mapping information between the stream ID and the storing scheme.

In operation S14, the host 100 may provide a stream ID together when providing a write request. For example, the host 100 may provide a write request, data to be written, a logical address LBA of the data, and a stream ID determined depending on attributes of the data.

In operation S15, the storage device 200 may store data in the target memory array corresponding to the stream ID by referring to the stream ID and the mapping information received along with the write request from the host 100.

FIG. 15 is a diagram illustrating operations of the host 100 and the storage device 200 according to a second example embodiment.

Referring to FIG. 15, in operation S21, the storage device 200 may map memory arrays and stream IDs. The storage device 200 may determine in advance a storing scheme applied to the memory arrays. Accordingly, when stream IDs are mapped to the memory arrays, a storage scheme corresponding to each stream ID may be mapped.

In operation S22, the storage device 100 may provide mapping information between the stream ID and the storing scheme to the host. In operation S23, the host 100 may allocate different stream IDs depending on data types with reference to the provided mapping information.

In operation S24, the host 100 may provide a stream ID together when providing a write request to the storage device 200. Operation S24 may be performed in substantially the same manner as operation S14 described with reference to FIG. 14. In operation S25, the storage device 200 may store data in the target memory array corresponding to the stream ID with reference to the mapping information in response to the write request. Operation S25 may be performed in substantially the same manner as operation S15 described with reference to FIG. 14.

According to an example embodiment, the storage device 200 may divide or sort pieces of data having different stream IDs and may store the divided or sorted pieces of data using different storing schemes. The storage device 200 may, by allowing the host 100 to allocate the stream IDs to the pieces of data depending on data attributes, provide differentiated data input/output performance, data stability, data recovery performance, and the like, depending on data attributes.

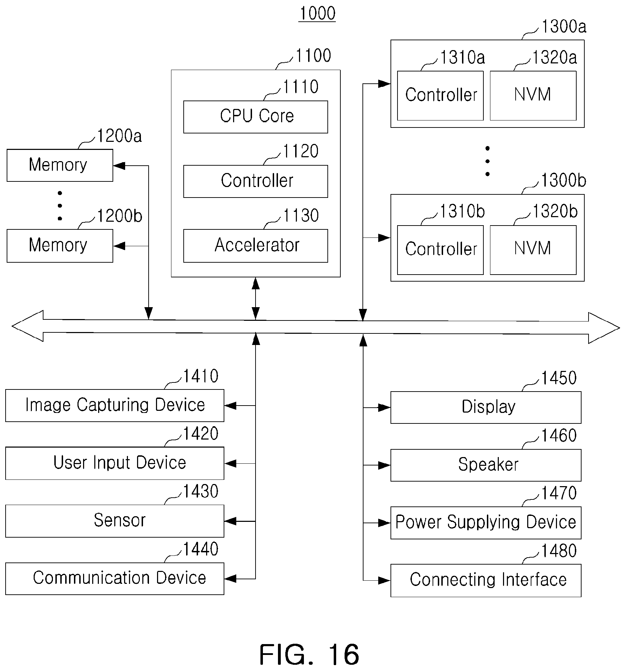

FIG. 16 is a diagram illustrating a system to which a storage device is applied according to an example embodiment.

FIG. 16 is a diagram illustrating a system 1000 to which a storage device according to an example embodiment is applied. The system 1000 in FIG. 16 may be implemented as a mobile system such as a mobile phone, such as a mobile phone, a smartphone, a tablet personal computer (PC), a wearable device, a healthcare device, or an Internet of things (lOT) device. However, the system 1000 in FIG. 16 is not necessarily limited to a mobile system, and may be implemented as a personal computer, a laptop computer, a server, a media player, or an automotive device such as a navigation system.

Referring to FIG. 16, the system 1000 may include a main processor 1100, memories 1200a and 1200b, and storage devices 1300a and 1300b, and may further include one or more of an image capturing device 1410, a user input device 1420, a sensor 1430, a communication device 1440, a display 1450, a speaker 1460, a power supplying device 1470 and a connecting interface 1480.

The main processor 1100 may control overall operations of the system 1000, more specifically, operations of the other elements included in the system 1000. The main processor 1100 may be implemented as a general-purpose processor, a dedicated processor, or an application processor.

The main processor 1100 may include one or more CPU cores 1110, and may further include a controller 1120 for controlling the memories 1200a, 1200b and/or the storage devices 1300a and 1300b. In example embodiments, the main processor 1100 may further include an accelerator 1130 which may be a dedicated circuit for high-speed data operation such as artificial intelligence (Al) data operation. The accelerator 1130 may include a graphics processing unit (GPU), a neural processing unit (NPU), and/or a data processing unit (DPU), and may be implemented as a chip physically independent from the other elements of the main processor 1100.

The memories 1200a and 1200b may be used as a main memory device of the system 1000, and may include a volatile memory such as SRAM and/or DRAM, or may include a nonvolatile memory such as a flash memory, PRAM and/or RRAM. The memories 1200a and 1200b may be implemented in the same package with the main processor 1100.

The storage devices 1300a and 1300b may function as nonvolatile storage devices which may store data regardless of whether power is supplied or not, and may have a relatively large storage capacity as compared to the memories 1200a and 1200b. The storage devices 1300a and 1300b may include storage controllers 1310a and 1310b and nonvolatile memory NVM 1320a and 1320b for storing data under control of the storage controllers 1310a and 1310b. The nonvolatile memories 1320a and 1320b may include a flash memory having a two-dimensional (2D) structure or a three-dimensional (3D) Vertical NAND (V-NAND) structure, or may include different types of nonvolatile memories such as PRAM and/or RRAM.

The storage devices 1300a and 1300b may be included in the system 1000 in a state of being physically isolated from the main processor 1100, or may be implemented in the same package with the main processor 1100. Also, the storage devices 1300a and 1300b may have the same shape as that of or may otherwise be implemented as a solid state device (SSD) or a memory card, such that storage devices 1300a and 1300b may be coupled to the other elements of the system 1000 through an interface such as a connecting interface 1480 to be described later. Such storage devices 1300a and 1300b may be devices to which standard protocols such as universal flash storage (UFS), embedded multi-media card (eMMC), or nonvolatile memory express (NVMe) are applied, but an example embodiment thereof is not limited thereto.

The image capturing device 1410 may obtain a still image or a video, and may be implemented as a camera, a camcorder, and/or a webcam.

The user input device 1420 may receive various types of pieces of data input from a user of the system 1000, and may be implemented as a touch pad, a keypad, a keyboard, a mouse and/or a microphone.

The sensor 1430 may sense various types of physical quantities which may be obtained from an external entity of the system 1000, and may convert the sensed physical quantities into electrical signals. Such a sensor 1430 may be implemented as a temperature sensor, a pressure sensor, an illuminance sensor, a position sensor, an acceleration sensor, a biosensor and/or a gyroscope sensor.

The communication device 1440 may transmit and receive signals between other devices outside the system 1000 in accordance with various communication protocols. Such a communication device 1440 may be implemented as an antenna, a transceiver, and/or a modem.

The display 1450 and the speaker 1460 may function as output devices for outputting visual information and auditory information to the user of the system 1000, respectively.

The power supplying device 1470 may appropriately convert power supplied from a battery (not illustrated) and/or an external power source embedded in the system 1000 and may supply the power to each element of the system 1000.

The connecting interface 1480 may provide a connection between the system 1000 and an external device connected to the system 1000 and exchanging data with the system 1000. The connecting interface 1480 may be implemented as various interface methods such as, for example, advanced technology attachment (ATA), serial ATA (SATA), external SATA (e-SATA), small computer small interface (SCSI), serial attached SCSI (SAS), peripheral component interconnection (PCI), PCI express (PCIe), NVMe (NVM express), IEEE 1394, universal serial bus (USB), secure digital (SD) card, multi-media card (MMC), embedded multi-media card (eMMC), universal Flash Storage (UFS), embedded universal Flash Storage (eUFS), compact flash (CF) card interface, and the like.

Data generated by the system 1000 may have various attributes. According to an example embodiment, each of the storage devices 1300a and 1300b may store the pieces of data by classifying pieces of data depending on the attributes thereof. The main processor 1100 may allocate stream IDs to the pieces of data according to the attributes thereof to be stored in the storage devices 1300a and 1300b, and may provide the stream IDs together with a write request for the pieces of data. The storage devices 1300a and 1300b may divide or sort the pieces of data according to attributes by referring to the stream IDs received along with the write request, and may store the divided or sorted pieces of data in the plurality of memory arrays using different storing schemes. For example, when system data is stored in one or more of the storage devices 1300a and 1300b using a mirroring scheme, stability and recovery performance of system data may improve, and when user data is stored in one or more of the storage devices 1300a and 1300b using a striping scheme, the storage space of the storage device(s) 1300a and 1300b may be used efficiently.

According to the aforementioned example embodiments, the storage device may store the pieces of data in different memory arrays depending on stream IDs allocated to the pieces of data, and may control the different memory arrays to store the pieces of data in different schemes, such that input/output performance and data recovery performance may be differentiated depending on the stream IDs allocated to the pieces of data.

Also, in an electronic system, a host may allocate different stream IDs to pieces of data having different attributes, and the storage device may provide different input/output performance and data recovery performance depending on data attributes.

While the example embodiments have been illustrated and described above, it will be apparent to those skilled in the art that modifications and variations could be made without departing from the scope of the invention as defined by the appended claims.

## Claims

1. A storage device, comprising:
a memory device comprising a plurality of first nonvolatile memories and a plurality of second nonvolatile memories; and
a controller configured to sort pieces of data having different attributes received from a host, and store the pieces of data that were sorted in different first or second memory arrays of the memory device,
wherein the controller is configured to store data in the first memory array by a mirroring scheme using the plurality of first nonvolatile memories, and is configured to store data in the second memory array by a striping scheme using the plurality of second nonvolatile memories.

2. The storage device of claim 1, wherein the plurality of first nonvolatile memories have first bit density, and wherein the plurality of second nonvolatile memories have second bit density higher than the first bit density.

3. The storage device of claim 1 or 2, wherein the plurality of first nonvolatile memories comprises single level cells (SLC), and wherein the plurality of second nonvolatile memories comprises multi-level cells (MLC), triple level cells (TLC), or quadruple level cells (QLC).

4. The storage device of claim 1, 2 or 3, wherein the storage device further comprises a plurality of channels connecting the controller to the memory device, and wherein each of the plurality of first nonvolatile memories and the plurality of second nonvolatile memories is connected to the controller through a different respective channel among the plurality of channels.

5. The storage device of any one of claims 1 to 4, wherein the controller is configured to divide the pieces of data received from the host into data units of a predetermined size, generate cyclic redundancy check, CRC, values for the data units, respectively, generate a plurality of data chunks by adding the CRC values to the data units, respectively, and store the plurality of data chunks in the plurality of first nonvolatile memories, respectively, thereby storing the pieces of data in the first memory array by the mirroring scheme.

6. The storage device of claim 5, wherein the controller is configured to receive a read request from the host, and
when target data chunks corresponding to the read request are stored in the first memory array, the controller is configured to load the target data chunks from the plurality of first nonvolatile memories, respectively, and
when an error is detected in one of the data chunks among the target data chunks, the controller is configured to provide a response to the read request to the host using other data chunks among the target data chunks.

7. The storage device of claim 6, wherein the controller is configured to obtain the target data chunks from the plurality of first nonvolatile memories in parallel.

8. The storage device of claim 6 or 7, wherein the controller is configured to recover the first memory array from the error, by storing the other data chunks in the plurality of first nonvolatile memories, respectively.

9. The storage device of any one of claims 1 to 8, wherein the controller is configured to divide the pieces of data received from the host into data units of a predetermined size, generate CRC values for the data units, respectively, generate a plurality of data chunks by adding the CRC values to the data units, respectively, generate a parity chunk by performing a parity operation on a predetermined number of data chunks among the plurality of data chunks, and store a stripe comprising the predetermined number of data chunks and the parity chunk across the plurality of second nonvolatile memories, thereby storing the pieces of data in the second memory array by the striping scheme.

10. The storage device of claim 9, wherein the controller is configured to receive a read request from the host, and
when a target data chunk corresponding to the read request is stored in the second memory array, the controller is configured to load the stripe comprising the target data chunk from the plurality of second nonvolatile memories, and
when an error is detected in the target data chunk, the controller is configured to recover the target data chunk using other data chunks and the parity chunk included in the stripe and provides the target data chunk that was recovered to the host.

11. The storage device of claim 10, wherein the controller is configured to obtain the target data chunk, the other data chunks, and the parity chunk included in the stripe from the plurality of second nonvolatile memories in parallel.

12. The storage device of claim 10 or 11, wherein the controller is configured to restore the second memory array from the error by storing the target data chunk that was recovered, the other data chunks, and the parity chunk across the plurality of second nonvolatile memories.

13. The storage device of any one of claims 1 to 12, wherein respective stream identifiers (stream IDs) are allocated to the pieces of data having different attributes, and
wherein the controller is configured to determine the different attributes of the pieces of data received from the host based on the respective stream IDs received with the pieces of data, and
wherein the controller is configured to store the pieces of data comprising system data in the plurality of first nonvolatile memories according to the mirroring scheme based on the respective stream IDs allocated thereto, and to store the pieces of data comprising user data in the plurality of second nonvolatile memories according to the striping scheme based on the respective stream IDs allocated thereto.

14. The storage device of claim 13, wherein the controller is configured to map the respective stream IDs to storage schemes comprising the mirroring scheme or the striping scheme, and to provide mapping information between the respective stream IDs and the storage schemes to the host.

15. The storage device of any one of claims 1 to 14, wherein the storage device is a solid state drive (SSD), and
wherein each of the plurality of first nonvolatile memories and the plurality of second nonvolatile memories is a memory chip.
